# EUROPÄISCHE PATENTSCHRIFT

(11) **EP 0 543 849 B1**
(45) Veröffentlichungstag und Bekanntmachung des Hinweises auf die Patenterteilung: **25.01.1995**
(21) Anmeldenummer: 91914143.2
(22) Anmeldetag: 03.08.1991
(51) Int. Cl.: C09D 7/00, B05D 1/02

(54) **VERWENDUNG VON MOLYBDÄNVERBINDUNGEN ZUR LACK-KOAGULIERUNG**
USE OF MOLYBDENUM COMPOUNDS FOR PAINT COAGULATION
UTILISATION DE COMPOSES DE MOLYBDENE POUR COAGULER DES LAQUES

(30) Priorität: 14.08.1990 DE 4025729
(43) Veröffentlichungstag der Anmeldung: 02.06.1993
(73) Patentinhaber: Henkel Kommanditgesellschaft auf Aktien, 40191 Düsseldorf (DE)
(72) Erfinder: GEKE, Jürgen, D-4000 Düsseldorf 1 (DE); MARGEIT, Ragnar, D-4100 Duisburg 14 (DE); REHM, Hans-Jörg, D-4010 Hilden (DE)
(86) Internationale Anmeldenummer: EP9101464
(87) Internationale Veröffentlichungsnummer: WO9203511

(56) Entgegenhaltungen:
- EP-A- 0 117 586
- EP-A- 0 158 896
- EP-A- 0 168 625
- EP-A- 0 335 210
- EP-A- 0 342 339
- US-A- 4 853 132

## Beschreibung

Die Erfindung betrifft die Verwendung von Molybdänverbindungen in Umlaufwässern von Naßabscheidern für Spritzlackieranlagen sowie ein Verfahren zur Entklebung und Koagulation von Lacken, Wachsen und anderen organischen Beschichtungsmitteln durch molybdänhaltige Koagulationsmittel.

Bei der Aufbringung von Lacken, Wachsen oder ähnlichen, nicht wasserlösliche organische Substanzen enthaltenden Beschichtungsmaterialien, beispielsweise in der Automobilindustrie, gelingt es nicht, die Materialien restlos auf die zu beschichtenden Teile aufzubringen. Speziell bei der Lackierung von Kraftfahrzeugen, die üblicherweise in geschlossenen, eine automatische Applikation der Lacke bzw. Beschichtungsmittel ermöglichenden Räumen (Lackspritzkabinen) durchgeführt wird, fällt ein sogenanntes "Overspray" an, das mittels eines an den Wänden der Lackspritzkabinen herabrieselnden Wasservorhangs aufgefangen und in ein sogenanntes Beruhigungsbecken gespült wird. Um einerseits die Funktion der wasserführenden Leitungs-, Düsen- und Berieselungssysteme durch klebende Lackpartikel nicht zu stören und andererseits das umlaufende Wasser von den aufgenommenen Inhaltsstoffen zu entsorgen, müssen zur Entklebung und Koagulierung der genannten Stoffe dem Wasser Chemikalien zugegeben werden. Dabei sollte die Entklebung der verspritzten und vom Wasser aufgenommenen Lackpartikel und deren Agglomeration zu einem austragungsfähigen Koagulat in einem Arbeitsgang erfolgen.

Zur Koagulierung herkömmlicher, vor allem in der Automobilindustrie verwendeter Lacke stehen eine Reihe neutraler und alkalischer Produkte zur Verfügung. Um eine Koagulation, d.h. Entklebung der Lackpartikel und deren Agglomeration zu einem austragungsfähigen Koagulat, zu erreichen, wurden gemäß dem Stand der Technik dem umlaufenden Wasser alkalische pulverförmige und alkalische flüssige Produkte oder pulverförmige neutrale Produkte zugesetzt. So werden in der GB-A-1 512 022 flockulierende, d.h. den Zusammenschluß von Teilchen unter Einwirkung intermolekularer brückenbildender Makromoleküle bewirkende, Agenzien beschrieben. Diese setzen sich zusammen aus als Klärmittel wirkenden anorganischen Metallsalzen (Eisen(II)chlorid oder Aluminiumsulfat) und organischen kationischen Polymeren, wie Polyvinylpyridin oder Polyaminen, in wäßriger Lösung.

Aus der Lehre der DE-A-33 16 878 sind flüssige Einkomponenten-Koagulierungsmittel bekannt, die Calcium- und/oder Magnesium-Nitrate, -Chloride und/oder -Sulfate sowie Polyethylenimine enthalten, die durch Protonierung oder Alkylierung kationisch modifiziert sind.

Speziell die Entsorgung von Zweikomponenten-Polyurethanlacken bereitete in der Vergangenheit immer wieder Schwierigkeiten. Zur Entsorgung von Nebeln derartiger Lacke und Beschichtungsmaterialien wurden in der DE-A 34 12 763 Mittel vorgeschlagen, die Cyanamid und/oder Dicyandiamid und/oder Cyanamidsalze in Verbindung mit üblicherweise in derartigen Koagulierungsmitteln enthaltenen Stoffen enthalten.

Ferner finden in letzter Zeit zunehmend Schichtsilikate verschiedenster Art, wie Bentonite (US-A- 42 20 456), Hectorite (EP-B-193 668), Montmorillonite (US-A-46 29 572), Kaoline (US-A-43 80 495) oder Smectite (US-A-47 01 220) Verwendung als Lackkoagulations- und Entklebungsmittel. Nach der Lehre der DE-C-38 17 251 kann auch Tonerde, insbesondere Böhmit oder Pseudoböhmit, als Lackentklebungs- und Sedimentationsmittel eingesetzt werden.

Aus der Lehre der US-A-44 96 374 und der EP-A-117 586 ist weiterhin bekannt, daß man Talkum in Kombination mit Calciumoxid, -hydroxid, -carbonat und/oder Zinkstearat, zum Koagulieren und Abscheiden von High Solid-Lacken einsetzen kann. Weiterhin ist aus der Lehre der DE-C-34 21 289 und der DE-C-27 58 873 bekannt, daß man Wachs, insbesondere Montanwachs oder Carnaubawachs, in Kombination mit Paraffinabkömmligen zum Entkleben und Koagulieren von Kunstharzlackanteilen in Naßabscheidern von Spritzlackieranlagen einsetzen kann.

Aus der Lehre der DE-A-38 10 166 der Anmelderin sind ferner wäßrige Konzentrate bekannt, die ein Ethylen-Acrylsäure-Copolymerisat zur Koagulation von Lacken und anderen organischen Beschichtungsmitteln enthalten.

Trotz der Vielzahl der im Stand der Technik vorgeschlagenen Rezepturen zeigte es sich jedoch, daß bei deren Anwendung in der Koagulation von Lacken und anderen Beschichtungsmitteln erhebliche Nachteile in Kauf genommen werden mußten. So werden bei einer Reihe von Rezepturen einzelne Komponenten unter den bei der Anwendung üblichen Bedingungen hydrolysiert. Damit werden Hydrolyseprodukte freigesetzt, die zu erheblicher Schaumbildung Anlaß geben. Dies führt dann dazu, daß die Anlagen zur Wasserberieselung von Lackspritzkabinen zeitweise stillgelegt werden müssen. Derartige Ausfälle können jedoch nicht in Kauf genommen werden.

Ergänzend dazu zeigt es sich bei einer Reihe von anderen Rezepturen, daß diese nicht in der Lage sind, Oversprays bestimmter Lacke in ausreichender Weise zu entkleben und zu koagulieren und damit einem durch Verkleben oder Verstopfen der Anlagen oder Anlagenteile verursachten Ausfall der Berieselungssysteme vorzubeugen. Schwierigkeiten werden beispielsweise immer wieder bei Ein- oder Zweikomponenten-Polyurethanlacken und sogenannten "High Solid-Lacken" verursacht, also Lacken, die einen ausgesprochen hohen Feststoffanteil aufwiesen. Im Zuge der Entsorgung derartiger Lacke wird immer wieder ein unerwünschter Anlagenstillstand durch unzureichende Entklebung oder Bildung nicht austragfähiger, hart agglomerierter Koagulate beobachtet.

Aufgabe der vorliegenden Erfindung war es, eine vollständige Entklebung und Koagulation auch bei derartigen Problemlacken zu gewährleisten. Zudem sollten die neuen Koagulationsmittel auch anwendbar sein bei der Entsorgung üblicher, auf Wasserbasis oder auf Ölbasis konfektionierter Lacksysteme. Zudem wurde angestrebt, solche Koagulationsmittel zu entwickeln, die in der Lage sind, in den modernen, automatisch auf adsorptiver Basis entsorgenden Anlagen (beispielsweise den sogenannten "ESKA"-Anlagen) einsetzbar zu sein, in denen die entklebten Lackpartikel nicht flotiert oder sedimentiert, sondern in Dispersion gehalten werden müssen. Eine ausreichende Dispergierung der entklebten Lackpartikel war also ebenfalls Ziel der vorliegenden Erfindung.

Überraschend wurde nun gefunden, daß eine ausgezeichnete Entklebung der Lackpartikel üblicher Lacke, aber auch der Problemlacke, sowie die Bildung dispergierfähiger, auf adsorptivem Wege entsorgbarer Lackreste dann möglich ist, wenn man den aus dem Stand der Technik bekannten Koagulationsmitteln Molybdänverbindungen zusetzt.

Die US-A-4 853 132 betrifft gleichfalls ein Verfahren zur Entklebung und Koagulation von Lacken in Umlaufwässern von Naßabscheidern für Spritzlackieranlagen, bei welchem unter anderem auch Molybdänverbindungen Verwendung finden können. Gemäß der Lehre dieser Patentschrift werden dem Umlaufwasser ein Salz eines ausgewählten anorganischen Anions sowie ein ausgewähltes kationisches Polymeres zugesetzt. Diese beiden Komponenten bilden dann zusammen einen Niederschlag, welcher erst die angestrebte Lack-Koagulierung bewirkt. Nicht jedes der hier offenbarten anorganischen Anionen kann jedoch mit jedem der hier offenbarten kationischen Polymeren kombiniert werden, um die angestrebte Wirkung zu erzielen. In diesem Sinne können Molybdate als anorganische Anionen (MoO₄) nur mit kationischen Polymeren vom Typ der Kondensationsprodukte aus Melamin und Formaldehyd zusammen Verwendung finden, um einen Niederschlag zu bilden, der als das eigentliche Koagulierungsmittel wirksam wird.

Der Gegenstand der vorliegenden Erfindung ist demgegenüber die Verwendung von Molybdänverbindungen in Umlaufwässern von Naßabscheidern für Spritzlackieranlagen zur Entklebung und Koagulation von Lacken, Wachsen und anderen Beschichtungsmitteln,
dadurch gekennzeichnet, daß als Molybdänverbindungen wasserlösliche Alkalimetall-und/oder Ammoniumsalze der Molybdänsäure und/oder der Isopolymolybdänsäure in und/oder zusammen mit üblichen Lack-Koagulierungsmitteln eingesetzt werden, wobei diese Lackkoagulierungsmittel mindestens eine der nachfolgend genannten Komponenten a) bis g) als Wirkstoffe enthalten:
a) 0,5 bis 99 Gew.-% mindestens eines anorganischen Schichtsilikates, vorzugsweise aus der Gruppe der Montmorillonite, Bentonite, Hectorite oder Kaoline,
b) 0,5 bis 99 Gew.-% mindestens eines Salzes von Calcium, Magnesium, Aluminium oder Eisen, vorzugsweise in Form des Nitrats, Chlorids oder Sulfats,
c) 5 bis 20 Gew.-% mindestens eines Wachses, vorzugsweise in Form einer wäßrigen Dispersion,
d) 2 bis 25 Gew.-% mindestens eines Ethylen-acrylsäure-copolymerisats, das 8 bis 25 Gew.-% Acrylsäureeinheiten und 92 bis 75 Gew. -% Ethyleneinheiten, bezogen auf die Säureform des Copolymerisats, aufweist und als Salz einer anorganischen oder organischen Base vorliegt, vorzugsweise in Form eines wäßrigen Konzentrats,
e) 0,5 bis 99 Gew.-% an Talkum,
f) 0,5 bis 99 Gew.-% an Tonerden und
g) 0,5 bis 5 Gew.-% mindestens eines Polyethylenimins und/oder protonierte oder alkylierte Derivate des Polyethylenimins,
und wobei die Molybdänverbindungen in Mengen von 0,02 bis 5 ppm pro Stunde in das Umlaufwasser eindosiert werden.

Bei der erfindungsgemäßen Verwendung von Molybdänverbindungen in Koagulationsmitteln wirken eine oder auch mehrere der im Stand der Technik beschriebenen Mittel mit Molybdaten synergistisch zusammen. Molybdate als Komponenten dieser Koagulationsmittel im Sinne der Erfindung sind dabei entweder Molybdän(VI)oxid, das gegebenenfalls auch in Form seines Hydrats vorliegen kann. Dieses kann beispielsweise als Pulver anderen pulverförmigen Koagulationsmitteln beigegeben werden. Molybdate im Sinne der vorliegenden Erfindung sind jedoch auch wasserlösliche Molybdatsalze, also Monomolybdate und Polymolybdate, die einzeln oder in Kombination miteinander oder auch in Kombination mit Molybdäntrioxid synergistisch wirkende Komponente in den molybdänhaltigen Koagulationsmittel sein können. Als wasserlösliche Molybdatsalze sind in bevorzugten Ausführungsformen der Erfindung Alkalimetall- und/oder Ammoniumsalze der Molybdänsäure und/oder Isopolymolybdänsäure geeignet. Von diesen sind die Natrium- oder Ammoniummolybdate, insbesondere Na₂MoO₄, besonders bevorzugt. Koagulationsmittel, die neben anderen, in derartigen Mitteln üblichen Stoffen, Natriummolybdate enthalten, sind in der Lage, Nebel auch solcher Lacktypen vollständig zu entkleben und zu entsorgen, deren Behandlung mit Koagulationsmitteln aus dem Stand der Technik als problematisch, wenn nicht sogar als unmöglich angesehen worden war.

Im Sinne einer kontinuierlichen Dosierung von Molybdänverbindungen in das Umlaufwasser von Lackspritzkabinen haben sich Mengen von 0,5 bis 2,5 ppm pro Stunde bewährt.

Die Erfindung beruht in erster Linie auf der Erkenntnis, daß die im Umlaufwasser der Lackspritzkabinen gelösten Molybdänverbindungen in synergistischer Weise mit anderen Koagulationsmittel-Komponenten zusammenwirken und eine Verbesserung der Entklebung und Koagulation der Lackpartikelchen bewirken, die deutlich über die Summe der Entklebungs- und Koagulationswirkungen der Einzelkomponenten hinausgeht. Überraschend wurde darüber hinaus gefunden, daß eine derartige synergistische Wirkung bei einer Vielzahl ganz unterschiedlicher Koagulationsmittel eintritt, die zusätzlich zu den genannten Molybdänkomponenten einzelne oder eine Mehrzahl von Komponenten enthalten, die für derartige Koagulierungsmittel üblich und aus dem Stand der Technik bekannt sind.

So können in den molybdänhaltigen Koagulationsmitteln ein oder mehrere Schichtsilikat(e), beispielsweise die aus der Lehre der US-A-42 20 456, US-A-46 29 572, US-A-43 80 495 und US-A-47 01 220 sowie der europäischen Patentschrift EP-B-193 668 bekannten Verbindungen enthalten sein, die in bevorzugten Ausführungsformen aus der Gruppe der Bentonite, Hectorite, Montmorillonite und/oder Kaoline stammen.

Es hat sich ferner gezeigt, daß Kombinationen von Bentonit und Kaolin oder von Bentonit und Hectorit in Koagulationsmitteln ein sehr vorteilhaftes Koagulationspotential aufweisen. Mit Koagulationsmitteln, die neben Molybdaten eine Kombination derartiger Schichtsilikate aufweisen, können sogar Einkomponenten-Lacke, Polyesterlacke oder Einkomponenten-Polyurethanlacke mit hohem Feststoffanteil, auch in "High Solid-Qualität", die sonst nur unzureichend entklebt und koaguliert werden konnten, aus dem Umlaufwasser von Spritzkabinen restlos entsorgt werden.

Bei der erfindungsgemäßen Verwendung von Molybdänverbindungen in üblichen Koagulationsmitteln können anstelle von oder zusätzlich zu den oben genannten Komponenten die aus der Lehre der GB-A-1 512 022 bekannten Stoffe, wie ein oder mehrere wasserlösliche Aluminiumsalze und/oder Calciumsalze und/oder Magnesiumsalze enthalten sein, wobei aus der Gruppe der genannten Salze die Nitrate, Chloride und/oder Sulfate der genannten Metalle besonders bevorzugt sind. Derartige Salze können - sofern vollständig wasserlöslich - zu einer guten Entklebung und Dispergierung auch von Partikelchen solcher Lacke beitragen, die im Stand der Technik nicht oder nur unzureichend entsorgt werden konnten.

Im Sinne der vorliegenden Erfindung können die Molybdänverbindungen auch in und/oder zusammen mit den nachfolgenden literaturbekannten Lackkoagulationsmitteln eingesetzt werden:
wäßrige Wachsdispersionen, die nach der Lehre der DE-C-27 58 873 bzw. DE-C-34 21 289 im wesentlichen aus Montanwachs, Carnaubawachs und/oder Paraffinabkömmlingen bestehen;
wäßrige Konzentrate von Ethylen-acrylsäure-copolymerisaten, die nach der Lehre der DE-A-38 10 166 der Anmelderin aus 8 bis 25 Gew.-% Acrylsäureeinheiten und 92 bis 75 Gew.-% Ethyleneinheiten, bezogen auf die Säureform des Copolymerisats, bestehen und als Salz einer anorganischen oder organischen Base, vorzugsweise in Form von Alkalimetall-, Ammonium-, Amin- oder Alkanolaminsalzen, vorliegen;
wäßrige Talkumdispersionen, die nach der Lehre der EP-B-117 586, DE-A-34 05 451 und US-A-4 496 374 im wesentlichen aus Talkum, wasserlöslichen Polyhydroxyverbindungen, Calciumsalzen und Zinkstearat bestehen;
wäßrige Tonerdedispersionen, die nach der Lehre der DE-C-38 17 251 Pseudoböhmit oder Böhmit-Tonerde (Al₂O₃) neben üblichen Schaumdrückern enthalten.

Zusammen mit oder anstelle von einer oder mehreren der oben genannten, üblicherweise in derartigen Koagulierungsmitteln enthaltenen Stoffen können in den molybdänhaltigen Koagulationsmitteln Polyethylenimine enthalten sein, die durch Protonierung oder Alkylierung kationisch modifiziert sind. Derartige Polyethylenimine, die beispielsweise aus der Lehre der DE-A-33 16 878 bekannt sind, können mit Vorteil zusammen mit den oben genannten Calciumsalzen und/oder Magnesiumsalzen verwendet und liegen bevorzugterweise in einer Menge vor, die einem Molverhältnis Salz : Polyethylenimin von 50 : 1 bis 1 : 1 entspricht. Die Polyethylenimine sind entweder durch Protonierung oder Alkylierung, in der Regel durch Methylierung des Stickstoffs kationisch modifiziert, d.h. in die entsprechenden Ammoniumsalze überführt. Der Modifizierungsgrad ist dabei unterschiedlich und hängt ab vom neutralen Ausgangspolymeren, von der entsprechenden Säure zur Protonierung bzw. von dem entsprechenden Alkylierungsreagenz zur Alkylierung. Tertiäre Stickstoffatome derartiger Polymerer werden nicht vollständig protoniert bzw. alkyliert. Es sind protonierte und/oder alkylierte, bevorzugt methylierte Polyethylenimine verwendbar, die Molekularmassen im Bereich von 5 . 10⁴ bis 5 . 10⁷, vorzugsweise im Bereich von 7,5 . 10⁴ bis 5 . 10⁶, aufweisen.

Auch wenn mit Koagulationsmitteln, die in ihrer Zusammensetzung der obigen Beschreibung entsprechen, hervorragende synergistische Ergebnisse erzielt werden können, so ist es grundsätzlich darüber hinaus möglich, besonderen Anforderungen an derartige Koagulationsmittel dadurch Rechnung zu tragen, daß man ihnen zusätzlich weitere übliche Wirkstoffe und/oder Hilfsstoffe zusetzt. Die Koagulationsmittel können beispielsweise in oder zusammen mit den erfindungsgemäß enthaltenen Molybdaten, die aus der DE-A-34 12 763 bekannten Stoffe, wie Cyanamid und/oder Dicyandiamid und/oder Cyanamid-Salze, enthalten. Eine äußerst wirksame Koagulierung von Lacken und anderen organischen Beschichtungsmitteln, insbesondere von Zweikomponenten-Polyurethanlacken, gelingt überraschenderweise bei Verwendung einer Kombination, die neben den erfindungsgemäß enthaltenen Molybdaten Cyanamid oder Dicyandiamid (1-Cyanoguanidin) oder Calciumcyanamid enthält, wobei diese Komponenten besonders gut wirksam sind, wenn sie im Umlaufwasser von Lackspritzkabinen, also in wäßriger Lösung, bei pH-Werten zwischen 3 und 12, bevorzugt zwischen 6,5 und 8,5 enthalten sind. Neben einer überraschend guten Entklebung der Lackpartikelchen und einer Agglomeration zu einem gut dispergierten und in dieser Form austragungsfähigen Koagulat haben die genannten Cyanamid-Derivate den Vorteil, daß sich Überschüsse, die nicht an der Entklebung und Agglomeration der Lackpartikelchen beteiligt sind, in Wasser langsam und kontinuierlich rückstandsfrei zu NH₃ und CO₂ auflösen und daher das Umlaufwasser in keiner Weise belasten. Der entstehende Ammoniak ist in Lösung wie auch im Dampfschwadenraum zudem als Korrosionsinhibitor für Anlagenteile aus Eisen und Stahl wirksam.

Als zusätzliche Wirkstoffe können auch die aus der Lehre der DE-A-15 17 409 bekannten Alkali- und Erdalkalisalze, wie Hydroxide, Carbonate und/oder Hydrogencarbonate in und/oder zusammen mit den Molybdänverbindungen in den Koagulationsmitteln mit Erfolg eingesetzt werden. Weitere spezielle Anforderungen an die Lackkoagulationsmittel können z.B. die Einstellung eines bestimmten pH-Werts oder die antimikrobielle Ausrüstung der Koagulationsmittel sein. Ein geeigneter Zusatz für diesen Zweck ist beispielsweise Borsäure, die antimikrobielle Wirkung besitzt und gegebenenfalls auch zur pH-Wert-Einstellung beitragen kann. Der pH-Wert-Einstellung dienen gegebenenfalls Zusätze von Phosphorsäure, organischen Säuren, wie Citronensäure, oder anderen, nicht korrosiven Säuren bzw. deren sauren Salzen. Zur pH-Wert-Einstellung von sauren Lösungen werden basische Verbindungen, wie Alkalimetallhydroxide, Amine oder Alkanolamine, bevorzugt eingesetzt. Zusätzlich oder stattdessen können auch Biozide eingesetzt werden. Beispielhaft dafür sind Formaldehyd, Isothiazoline und deren Derivate sowie Pyridin-N-oxid und dessen Derivate zu nennen.

Als weitere mögliche Bestandteile der molybdänhaltigen Koagulationsmittel kommen auch Korrosionsinhibitoren und zusätzliche Antischaummittel in Frage. Als Korrosionsinhibitoren werden wasserlösliche Salze von Phosphonsäuren und Zinksalze, bevorzugt das Natriumsalz der 2-Phosphonobutan-1.2.4-tricarbonsäure oder das Zinksalz des 2-Pyridinthiol-1-oxids verwendet. Als Antischaummittel hat sich neben den für diesen Zweck aus dem Stand der Technik bekannten Mitteln das Produkt Dehydran^{R} F (Henkel KGaA) bewährt.

In einer bevorzugten Ausführungsform der vorliegenden Erfindung enthalten die oben genannten molybdänhaltigen Koagulationsmittel zusätzlich mindestens eine der nachfolgend genannten Komponenten h) bis j):
h) mindestens eine Verbindung aus der Gruppe Cyanamid, Dicyandiamid oder der Cyanamid-Salze, vorzugsweise Dicyandiamid oder Calcium-Cyanamid,
i) mindestens ein Hydroxid, Carbonat oder Hydrogencarbonat der Alkali- oder Erdalkalimetalle,
j) in Lack-Koagulierungsmitteln übliche Wirk- und/oder Hilfsstoffe, vorzugsweise Biozide, pH regulierende Stoffe, Korrosionsinhibitoren, Antischaummittel oder Solubilisierungsmittel.

Die Herstellung der Lackkoagulierungsmittel erfolgt durch Vermischen der oben genannten Einzelkomponenten in den angegebenen Mengenverhältnissen. Dabei werden die im wesentlichen festen Einzelkomponenten in Pulverform miteinander gemischt und damit pulverförmige Koagulationsmittel konfektioniert. Die Konfektionierung in Pulverform ist erfindungsgemäß besonders bevorzugt, da sie die Lagerung und den Transport der Koagulierungsmittel erleichtert und das Problem des Absetzens von Feststoffen in größeren Gebinden gar nicht auftreten kann. Zudem wird vermieden, daß mehr oder weniger große Wassermengen, die derartigen Pulvern zur Bildung von Slurries als weitere Verkaufsform zugesetzt werden müssen, vom Herstellungsort zu den Anwendern transportiert werden müssen. Es ist jedoch auch möglich, schon am Herstellungsort die entsprechenden pulverförmig konfektionierten Koagulationsmittel in Wasser einzurühren, um dadurch speziellen Anwender-Erfordernissen Rechnung zu tragen. Die Herstellung derartiger wäßriger Slurries kann nicht nur dadurch erfolgen, daß die pulverförmig konfektionierten Produkte unmittelbar in Wasser eingerührt werden, sondern auch dadurch, daß man die Einzelkomponenten zu wäßrigen Slurries oder Lösungen zusammenmischt. Derartige Slurries enthalten alle Wirkstoffe gemeinsam in einem Gesamtgehalt von 5 bis 12 Gew.-%, bevorzugt von 8 bis 10 Gew.-%. Die Mischungen in Pulverform bzw. wäßrigen Slurries können dann zu gegebener Zeit bzw. am Einsatzort in den Anwendungskreislauf, d.h. beispielsweise in das Umlaufwasser von Lackspritzkabinen, eingebracht werden. Der Zusatz zum Umlaufwasser erfolgt zweckmäßig an einer Stelle mit kräftiger Turbulenz des Umlaufwassers bei laufender Pumpe, um eine schnelle Verteilung zu gewährleisten.

Die Dosierung der erfindungsgemäßen Koagulierungsmittel erfolgt entweder kontinuierlich mittels geeigneter, gegebenenfalls automatisierbarer Dosiergeräte oder diskontinuierlich, z.B. einmal pro Tag. Dabei werden dem Umlaufwasser die erfindungsgemäßen Koagulierungsmittel in einer solchen Menge zugesetzt, daß ihre Gewichtsmengen 20 bis 100 % der berechneten Mengen an Lackoverspray ausmachen. Dies bedeutet, daß bei einer berechneten Gewichtsmenge von Lackoverspray 20 bis 100 Gew.-% dieser Menge an wäßrigem Slurry zugesetzt werden müssen, das 5 bis 12 Gew.-%, bevorzugt 8 bis 10 Gew.-%, der pulverförmig konfektionierten Wirkstoffe und 88 bis 95 Gew.-%, bevorzugt 90 bis 92 Gew.-%, Wasser enthält. Bei einem unmittelbaren Zusatz der pulverförmigen Produkte würde sich die Pulverdosis in entsprechender Weise reduzieren. Insgesamt muß bei der Dosierung sichergestellt sein, daß genügend Molybdat in den Umlaufwässern enthalten ist, um zusammen mit den anderen genannten Stoffen eine vollständige Entklebung und Koagulation der Lackpartikel sicherzustellen.

Ein weiterer Gegenstand der vorliegenden Erfindung betrifft ein Verfahren zur Entklebung und Koagulation von Lacken, Wachsen und anderen organischen Beschichtungsmitteln, das dadurch gekennzeichnet ist, daß man dem Umlaufwasser in Naßabscheidern von Spritzanlagen eine Molybdänverbindung in Kombination mit literaturbekannten Koagulationsmitteln zusetzt.

Des pH-Wert des Umlaufwassers kann im Bereich von 1 bis 14 liegen.

In einer bevorzugten Ausführungsform des erfindungsgemäßen Verfahrens stellt man den pH-Wert des Umlaufwassers entweder auf einen schwach sauren Wert im Bereich von 2,5 bis 5 oder einen schwach alkalischen Bereich von 7,5 bis 9,5 ein.

Bei Zugrundelegung der angegebenen Konzentrationen kann eine vollständige Entklebung der Lackpartikel auch bei solchen Lacken in vorteilhafter Weise erreicht werden, die sich mit bisher aus dem Stand der Technik bekannten Koagulationsmitteln, inbesondere mit Molybdat-freien Koagulationsmitteln nicht oder nur unzureichend entkleben ließen. Die entklebten Lackpartikel lassen sich ausgezeichnet zu größeren Agglomeraten koagulieren, die nicht an den Wänden der Leitungen, Pumpen und Behältnisse anhaften, sondern in der Dispersion gleichmäßig verteilt sind und sich auch durch automatische Anlagen problemlos entsorgen lassen. Letzteres Erfordernis ist besonders vorteilhaft bei den zunehmend in Gebrauch kommenden automatischen Lackentsorgungslinien, die auf der Basis einer adsorptiven Entsorgung der Lackoversprays arbeiten ("ESKA"-Anlagen).

Die Erfindung wird durch die nachfolgenden Beispiele näher erläutert.

### Beispiele

### Beispiel 1

Pulverförmiges Koagulationsmittel
2,0 Gew.-% Natriummolybdat
57,0 Gew.-% Bentonit¹
20,0 Gew.-% Aluminiumsulfat
15,0 Gew.-% Aluminiumoxid
2,4 Gew.-% Borsäure
3,0 Gew.-% Talkum
0,6 Gew.-% protoniertes Polyethylenimin²
¹ "Aktiv-Bentonit B", Fa. Erbslöh, Düsseldorf
² "Super Floc^{R} C 577", Fa. American Cyanamid Co., USA, MG: ca. 2 · 10⁵, in 50 Gew.-%iger wäßriger Lösung

### Beispiel 2

Pulverförmiges Koagulationsmittel
2,0 Gew.-% Natriummolybdat
90,0 Gew.-% Bentonit¹
8,0 Gew.-% Dicyandiamid

### Beispiel 3

Pulverförmiges Koagulationsmittel
2,0 Gew.-% Natriummolybdat
88,0 Gew.-% Bentonit¹
10,0 Gew.-% Dicyandiamid

### Beispiel 4

Flüssiges Koagulationsmittel
2,0 Gew.-% Natriummolybdat
33,0 Gew.-% Calciumchlorid
5,0 Gew.-% Magnesiumchlorid
4,0 Gew.-% protoniertes Polyethylenimin²
56,0 Gew.-% Wasser
² "Super Floc^{R} C 577", Fa. American Cyanamid Co., USA, MG: ca. 2 · 10⁵, in 50 Gew.-%iger wäßriger Lösung

### Beispiel 5

Flüssiges Koagulationsmittel
2,0 Gew.-% Natriummolybdat
43,0 Gew.-% Ethylen-acrylsäure-copolymerisat³
2,0 Gew.-% Dicyandiamid
53,0 Gew.-% Wasser
³ "Poligen^{R} WE", Fa. BASF

### Vergleichsbeispiel

Pulverförmiges Koagulationsmittel
90 Gew.-% Bentonit¹
10 Gew.-% Dicyandiamid
¹ "Aktiv-Bentonit B", Fa. Erbslöh, Düsseldorf

**Tabelle**

| **Lackkoagulierungseigenschaften von molybdänhaltigen Koagulationsmitteln** | | | |
|---|---|---|---|
| Lack | Koagulationsmittel | Aussehen | Koagulierergebnis |
| High Solid Primer Surfacer¹ | Vergleichsbeispiel | grobdispers | austragsfähig³ |
| High Solid Primer Surfacer¹ | Beispiel 3 | feindispers | entklebt |
| Black out² | Vergleichsbeispiel | grobdispers | austragsfähig³ |
| Black out² | Beispiel 3 | feindispers | entklebt |

| | | | |
|---|---|---|---|
| ¹ Polyesterlack der Fa. BASF (63 % Feststoffgehalt) | | | |
| ² Polyesterlack der Fa. PPG (30 % Feststoffgehalt) | | | |
| ³ Oberfläche entklebt, aber innen noch klebrig | | | |

Die Koagulationswirkung des erfindungsgemäßen Beispiels 3 und des Vergleichbeispiels wurden für 2 verschiedene Polyesterlacke geprüft. Hierbei wurden alle Versuche mit jeweils 20 Gew.-% und 100 Gew.-% der Koagulationsmittel, bezogen auf 100 g Lackoverspray, durchgeführt. Überraschenderweise zeigte das erfindungsgemäße Beispiel 3 neben einem feindispersen Aussehen bessere Entklebungseigenschaften.

## Patentansprüche

1. Verwendung von Molybdänverbindungen in Umlaufwässern von Naßabscheidern für Spritzlackieranlagen zur Entklebung und Koagulation von Lacken, Wachsen und anderen Beschichtungsmitteln,
dadurch gekennzeichnet, daß als Molybdänverbindungen wasserlösliche Alkalimetall-und/oder Ammoniumsalze der Molybdänsäure und/oder der Isopolymolybdänsäure in und/oder zusammen mit üblichen Lack-Koagulierungsmitteln eingesetzt werden, wobei diese Lackkoagulierungsmittel mindestens eine der nachfolgend genannten Komponenten a) bis g) als Wirkstoffe enthalten:
a) 0,5 bis 99 Gew.-% mindestens eines anorganischen Schichtsilikates, vorzugsweise aus der Gruppe der Montmorillonite, Bentonite, Hectorite oder Kaoline,
b) 0,5 bis 99 Gew.-% mindestens eines Salzes von Calcium, Magnesium, Aluminium oder Eisen, vorzugsweise in Form des Nitrats, Chlorids oder Sulfats,
c) 5 bis 20 Gew.-% mindestens eines Wachses, vorzugsweise in Form einer wäßrigen Dispersion,
d) 2 bis 25 Gew.-% mindestens eines Ethylen-acrylsäure-copolymerisats, das 8 bis 25 Gew.-% Acrylsäureeinheiten und 92 bis 75 Gew.-% Ethyleneinheiten, bezogen auf die Säureform des Copolymerisats, aufweist und als Salz einer anorganischen oder organischen Base vorliegt, vorzugsweise in Form eines wäßrigen Konzentrats,
e) 0,5 bis 99 Gew.-% an Talkum,
f) 0,5 bis 99 Gew.-% an Tonerden und
g) 0,5 bis 5 Gew.-% mindestens eines Polyethylenimins und/oder protonierte oder alkylierte Derivate des Polyethylenimins,
und wobei die Molybdänverbindungen in Mengen von 0,02 bis 5 ppm pro Stunde in das Umlaufwasser eindosiert werden.

2. Verwendung nach Anspruch 1, dadurch gekennzeichnet, daß als Molybdänverbindungen Natriummolybdat und/oder Ammoniummolybdat eingesetzt werden.

3. Verwendung nach Anspruch 1 oder 2, dadurch gekennzeichnet, daß die Molybdänverbindungen in Mengen von 0,5 bis 2,5 ppm pro Stunde in das Umlaufwasser eindosiert werden.

4. Verwendung nach einem oder mehreren der Ansprüche 1 bis 3, dadurch gekennzeichnet, daß die Koagulationsmittel zusätzlich mindestens eine der nachfolgenden genannten Komponenten h) bis j) enthalten:
h) mindestens eine Verbindung aus der Gruppe Cyanamid, Dicyandiamid oder der Cyanamid-Salze, vorzugsweise Dicyandiamid oder Calcium-Cyanamid,
i) mindestens ein Hydroxid, Carbonat oder Hydrogencarbonat der Alkali-oder Erdalkalimetalle,
j) in Lack-Koagulierungsmitteln übliche Wirk- und/oder Hilfsstoffe, vorzugsweise Biozide, pH regulierende Stoffe, Korrosionsinhibitoren, Antischaummittel oder Solubilisierungsmittel.

5. Verwendung nach einem oder mehreren der Ansprüche 1 bis 4, dadurch gekennzeichnet, daß die Mittel in Form von Pulvern, wäßrigen Lösungen oder wäßrigen Dispersionen konfektioniert werden.

6. Verfahren zur Entklebung und Koagulation von Lacken, Wachsen und anderen organischen Beschichtungsmitteln, wobei man dem Umlaufwasser in Naßabscheidern von Spritzlackieranlagen eine Molybdänverbindung zusetzt, dadurch gekennzeichnet, daß man eine Molybdänverbindung nach den Ansprüchen 1 bis 5 verwendet.

7. Verfahren nach Anspruch 6, dadurch gekennzeichnet, daß der pH-Wert des Umlaufwassers im Bereich von 1 bis 14, vorzugsweise im Bereich von 2,5 bis 5 oder im Bereich von 7,5 bis 9,5 liegt.

## Claims

1. The use of molybdenum compounds in circuit waters of wet separators for spray painting installations for denaturing and coagulating paints, waxes and other coating materials, characterized in that water-soluble alkali metal and/or ammonium salts of molybdic acid and/or isopolymolybdic acid are used as the molybdenum compounds in and/or together with typical paint coagulants, these paint coagulants containing at least one of components a) to g) mentioned in the following as active substances:
a) 0.5 to 99% by weight of at least one inorganic layer silicate, preferably from the group of montmorillonites, bentonites, hectorites or kaolins,
b) 0.5 to 99% by weight of at least one salt of calcium, magnesium, aluminium or iron, preferably in the form of the nitrate, chloride or sulfate,
c) 5 to 20% by weight of at least one wax, preferably in the form of an aqueous dispersion,
d) 2 to 25% by weight of at least one ethylene/acrylic acid copolymer which contains 8 to 25% by weight of acrylic acid units and 92 to 75% by weight of ethylene units, based on the acid form of the copolymer, and which is present as the salt of an inorganic or organic base, preferably in the form of an aqueous concentrate,
e) 0.5 to 99% by weight of talcum,
f) 0.5 to 99% by weight of aluminas and
g) 0.5 to 5% by weight of at least one polyethylene imine and/or protonated or alkylated derivatives of polyethyleneimine,
the molybdenum compounds being added to the circuit water in quantities of 0.02 to 5 ppm per hour.

2. The use claimed in claim 1, characterized in that sodium molybdate and/or ammonium molybdate is/are used as the molybdenum compound(s).

3. The use claimed in claim 1 or 2, characterized in that the molybdenum compounds are added to the circuit water in quantities of 0.5 to 2.5 ppm per hour.

4. The use claimed in one or more of claims 1 to 3, characterized in that the coagulants additionally contain at least one of components h) to j) mentioned in the following:
h) at least one compound from the group consisting of cyanamide, dicyanodiamide or cyanamide salts, preferably dicyanodiamide or calcium cyanamide,
i) at least one hydroxide, carbonate or hydrogen carbonate of the alkali or alkaline earth metals,
j) auxiliaries and additives typically present in paint coagulants, preferably biocides, pH regulators, corrosion inhibitors, antifoam agents or solubilizers.

5. The use claimed in one or more of claims 1 to 4, characterized in that the coagulants are made up in the form of powders, aqueous solutions or aqueous dispersions.

6. A process for denaturing and coagulating paints, waxes and other organic coating materials, a molybdenum compound being added to the circuit water in wet separators of spray painting installations, characterized in that a molybdenum compound according to claims 1 to 5 is used.

7. A process as claimed in claim 6, characterized in that the pH value of the circuit water is in the range from 1 to 14 and preferably in the range from 2.5 to 5 or in the range from 7.5 to 9.5.

## Revendications

1. Utilisation de composés de molybdène dans des eaux de circulation de séparateurs par voie humide destinés à des installations de peinture au pistolet pour le décollement et la coagulation de laques, de vernis ou de peintures, de cires et d'autres agents d'enduction,
caractérisée en ce que, comme composés de molybdène, on met en oeuvre des sels hydrosolubles de métaux alcalins et/ou d'ammonium de l'acide molybdique et/ou de l'acide isopolymolybdique dans et/ou conjointement avec des agents habituels de coagulation de laques, de vernis ou de peintures, dans laquelle ces agents de coagulation de laques, de vernis ou de peintures contiennent, comme substances actives, au moins un des composants a) à g) mentionnés ci-après :
a) de 0,5 à 99% en poids d'au moins un silicate stratifié inorganique de préférence du groupe de la montmorillonite, de la bentonite, de l'hectorite ou des kaolins,
b) de 0,5 à 99% en poids d'au moins un sel du calcium, du magnésium, de l'aluminium ou du fer, de préférence sous forme du nitrate, du chlorure ou du sulfate,
c) de 5 à 20% en poids d'au moins une cire de préférence sous forme d'une dispersion aqueuse,
d) de 2 à 25% en poids d'au moins un copolymère d'éthylène-acide acrylique qui présente de 8 à 25% en poids d'unités d'acide acrylique et de 92 à 75% en poids d'unités d'éthylène, rapportées à la forme acide du copolymère, et qui est présent sous forme de sel d'une base inorganique ou organique, de préférence sous forme d'un concentrat aqueux,
e) de 0,5 à 99% en poids de talc,
f) de 0,5 à 99% en poids d'alumine, et
g) de 0,5 à 5% en poids d'au moins une polyéthylène-imine et/ou de dérivés protonés ou alkylés de la polyéthylène-imine,
et dans laquelle les composés de molybdène sont introduits par dosage dans des quantités de 0,02 à 5 ppm par heure dans l'eau de circulation.

2. Utilisation selon la revendication 1, caractérisée en ce que, comme composés du molybdène, on met en oeuvre le molybdate de sodium et/ou le molybdate d'ammonium.

3. Utilisation selon la revendication 1 ou 2, caractérisée en ce qu'on introduit par dosage dans l'eau de circulation, les composés de molybdène dans des quantités de 0,5 à 2,5 ppm par heure.

4. Utilisation selon l'une ou plusieurs des revendications 1 à 3, caractérisée en ce que les agents de coagulation contiennent, en outre, au moins un des composants h) à j) mentionnés ci-après :
h) au moins un composé du groupe du cyanamide, du dicyandiamide ou des sels de cyanamide, de préférence le dicyandiamide ou du cyanamide de calcium,
i) au moins un hydroxyde, un carbonate ou un hydrogénocarbonate de métaux alcalins ou alcalinoterreux,
j) des substances actives et/ou des adjuvants habituels dans des agents de coagulation de laques, de vernis ou de peintures, de préférence des biocides, des substances régulatrices du pH, des inhibiteurs de la corrosion, des agents antimousse ou des agents de solubilisation.

5. Utilisation selon l'une ou plusieurs des revendications 1 à 4, caractérisée en ce qu'on confectionne les agents sous forme de poudres, de solutions aqueuses ou de dispersions aqueuses.

6. Procédé pour le décollement et la coagulation de laques, de vernis ou de peintures, de cires et d'autres agents d'enduction organiques, dans lequel on ajoute à l'eau de circulation dans des séparateurs par voie humide d'installations de peinture au pistolet, un composé de molybdène, caractérisé en ce qu'on utilise un composé de molybdène selon les revendications 1 à 5.

7. Procédé selon la revendication 6, caractérisé en ce que la valeur de pH de l'eau de circulation se situe dans le domaine de 1 à 14, de préférence dans le domaine de 2,5 à 5 ou bien dans le domaine de 7,5 à 9,5.
